(19) Europäisches Patentamt
European Patent Office
Office européen des brevets

(11) **EP 3 626 681 A1**

(12) **DEMANDE DE BREVET EUROPEEN**

(43) Date de publication:
**25.03.2020 Bulletin 2020/13**

(21) Numéro de dépôt: **19198440.0**

(22) Date de dépôt: **19.09.2019**

(51) Int Cl.:
*C01G 19/00* (2006.01)     *C01G 23/00* (2006.01)
*C01G 33/00* (2006.01)     *C01G 45/00* (2006.01)
*C01G 49/00* (2006.01)     *C01G 51/00* (2006.01)
*C01G 53/00* (2006.01)     *C01B 19/00* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **19.09.2018 FR 1858476**

(71) Demandeur: **Commissariat à l'Energie Atomique et aux Energies Alternatives**
**75015 Paris (FR)**

(72) Inventeurs:
• COLIN, Jean-François
  38054 Grenoble cedex 09 (FR)
• MARTINET, Sébastien
  38054 Grenoble cedex 09 (FR)
• PERALTA, David
  38054 Grenoble cedex 09 (FR)
• CELASUN, Yagmur
  38054 Grenoble cedex 09 (FR)

(74) Mandataire: **Nony**
**11 rue Saint-Georges**
**75009 Paris (FR)**

(54) **PROCEDE DE SYNTHESE**

(57)     Procédé de synthèse d'un matériau, le procédé comportant les étapes consistant à :
a) disposer d'une pluralité de poudres comportant :
- au moins une poudre comportant du lithium,
- au moins une poudre comportant, pour plus de 95,0 % de sa masse, un métal de transition choisi parmi le titane, le cobalt, le manganèse, le nickel, le niobium, l'étain, le fer et leurs mélanges, et
- au moins une poudre comportant pour plus de 95,0 % de sa masse, un élément chalcogène choisi parmi le soufre, le sélénium, le tellure et leurs mélanges,

b) préparer un mélange particulaire en mélangeant toutes les poudres de la pluralité ou en mélangeant une des poudres de la pluralité avec un broyat obtenu par broyage d'un ensemble particulaire formé par mélange d'au moins deux des autres poudres de la pluralité, et
o broyer le mélange particulaire pour former le matériau.

EP 3 626 681 A1

**Description**

La présente invention concerne un procédé de synthèse d'un matériau destiné à constituer au moins partiellement une cathode de batterie.

Les cathodes à base d'un élément chalcogène tel que le soufre, le tellure et sélénium présentent un fort potentiel pour des applications de batterie lithium-ion. En particulier, le sulfure de lithium titane, de formule $Li_2TiS_3$, connu notamment de EP 2 977 354 A1 et de l'article A. Sakuda et al., « Rock-salt-type lithium metal sulphide as novel positive-electrode materials », Sci. Rep., vol. 4, 4883 (2014). Il présente une capacité réversible élevée, supérieure à 250 mAh/g et pouvant atteindre 400 mAh/g grâce à des réactions d'oxydo-réduction à multiples électrons.

L'article de Sakuda et al. décrit un procédé de synthèse du sulfure de lithium titane, dans lequel un mélange particulaire, formé d'une poudre de sulfure de lithium $Li_2S$ et de sulfure de titane $TiS_2$, est broyé sous atmosphère neutre d'argon au moyen d'un broyeur planétaire à billes. L'énergie apportée par le broyage est suffisante pour que le sulfure de titane réagisse avec le sulfure de lithium pour former du sulfure de lithium titane selon le schéma réactionnel $Li_2S+TiS_2 \rightarrow Li_2TiS_3$. Les ions lithium $Li^+$ du sulfure de lithium titane décrit proviennent du précurseur sulfure de lithium $Li_2S$ et les ions titane $Ti^{4+}$ proviennent du précurseur sulfure de titane $TiS_2$ et les ions soufre $S^{2-}$ proviennent des précurseurs sulfure de lithium $Li_2S$ et sulfure de titane $TiS_2$.

Le procédé décrit dans Sakuda et al. est de mise en oeuvre simple. La synthèse du matériau est en outre relativement rapide.

Cependant, d'une manière générale, le résultat d'une synthèse par broyage de sels dépend de la morphologie et de la taille des particules des sels.

Par exemple, le sulfure de titane est un sel dont la synthèse est coûteuse et difficile à maîtriser. La variété des morphologies et des tailles de poudres de sulfure de titane disponibles commercialement est faible.

Les possibilités de mise en oeuvre d'un procédé de synthèse de Sakuda et al. sont donc limitées.

Il existe donc un besoin pour un procédé de synthèse surmontant cet inconvénient.

L'invention vise à satisfaire ce besoin, et propose un procédé de synthèse d'un matériau, le procédé comportant les étapes consistant à :

a) disposer d'une pluralité de poudres comportant :

- au moins une poudre comportant du lithium, dite « poudre lithiée »,
- au moins une poudre comportant, pour plus de 95,0 % de sa masse, un métal de transition choisi parmi le titane, le cobalt, le manganèse, le nickel, le niobium, l'étain, le fer et leurs mélanges, dite « poudre MT », et
- au moins une poudre comportant pour plus de 95,0 % de sa masse, un élément chalcogène choisi parmi le soufre, le sélénium, le tellure et leurs mélanges, dite « poudre chalcogène »,

b) préparer un mélange particulaire en mélangeant toutes les poudres de la pluralité ou en mélangeant une des poudres de la pluralité avec un broyat obtenu par broyage d'un ensemble particulaire formé par mélange d'au moins deux des autres poudres de la pluralité, et

c) broyer le mélange particulaire pour former le matériau.

Contre toute attente, les inventeurs ont réussi à synthétiser au moyen du procédé selon l'invention un matériau présentant une qualité cristalline et des propriétés électrochimiques sensiblement identiques à celles du produit obtenu à partir d'un procédé mettant en oeuvre un broyage de particules d'un sel lithié et de particules d'un sel formé de l'élément chalcogène et du métal de transition, comme par exemple décrit dans Sakuda et al.

Ceci s'est avéré particulièrement surprenant pour les raisons suivantes.

Le métal de transition, finement divisé à l'état de poudre, peut s'oxyder facilement. Par exemple, le titane s'oxyde facilement et peut même être inflammable au contact de l'air lorsque la taille des particules devient nanométrique. Un matériau présentant de telles caractéristiques est généralement négligé, car il peut empêcher la réalisation de la synthèse souhaitée. En outre, L'état d'oxydation et la réactivité des espèces mises en oeuvre lors d'une synthèse sont connues comme des paramètres prépondérants, influant la nature chimique et cristallographique du matériau synthétisé. Dans la poudre MT et dans la poudre chalcogène, les états d'oxydation respectifs du métal de transition et de l'élément chalcogène sont différents de leurs états lorsqu'ils forment un sel. Par exemple, dans une poudre de titane et dans une poudre de soufre, le titane et le soufre présentent chacun un état d'oxydation 0, alors que dans un sel de sulfure de titane, le titane présente un état d'oxydation +4 et le soufre présente un état d'oxydation -2. Par ailleurs, le métal de transition et de l'élément chalcogène, chacun dans une poudre différente, ne présentent pas la même réactivité vis-à-vis d'autres espèces chimiques, notamment du lithium, que lorsqu'ils forment un sel.

Par ailleurs, le procédé selon l'invention est particulièrement versatile. En effet, la granulométrie et la forme des particules des poudres MT peuvent plus aisément être modifiées que celles d'une poudre d'un sel formé de l'élément chalcogène et de l'élément de transition. Notamment, les catalogues commerciaux proposent une plus grande variété de poudres MT et de poudres chalcogène que de poudres de particules d'un tel sel.

En outre, le procédé selon l'invention permet, par réactions entre l'élément chalcogène, le métal de transition et le lithium, de synthétiser des matériaux pour lesquels un procédé à base de sels tels que décrit dans Sakuda et *al.* ne peut être mis en oeuvre. C'est par exemple le cas pour fabriquer un matériau comportant du lithium, du sélénium et du titane. Aucun sel consistant en du sélénium et du titane n'est connu, selon les inventeurs.

Enfin, le procédé selon l'invention est de mise en oeuvre aisée au moyen d'un broyeur conventionnel, pourvu que le broyeur apporte une énergie de broyage suffisante pour que la réaction des constituants des poudres de la pluralité puisse s'opérer. L'homme du métier sait aisément choisir un tel broyeur.

De préférence, les quantités de poudre lithiée, de poudre MT et de poudre chalcogène sont déterminées de telle sorte qu'en fin d'étape de broyage c), le matériau présente la formule (I)

$$Li_xM_yA_z,$$

Avec M étant un métal de transition choisi parmi le titane, le manganèse, le cobalt, le nickel, le niobium, l'étain, le fer et leurs mélanges, A étant un élément chalcogène choisi parmi le soufre, le tellure, le sélénium et leurs mélanges, les coefficients stoechiométriques x, y et z étant tels que

○

$$1,0 < x < 4,0 \;;$$

○

$$0 < y \leq 2,0 \;;$$

et

○

$$1,0 \leq z \leq 4,0.$$

La détermination des quantités adaptées des poudre lithiée, poudre MT et poudre chalcogène est une tache de routine pour l'homme du métier. Le métal de transition M peut être choisi parmi le titane, le manganèse, le cobalt et leurs mélanges.

De préférence, le coefficient stoechiométrique x du lithium est inférieur à 3,1, de préférence inférieur ou égal à 3,0 et/ou supérieur à 1,9. En particulier, le coefficient stoechiométrique x peut être égal à 2,0.

De préférence, le coefficient stoechiométrique y du métal de transition est inférieur à 1,5, de préférence inférieur ou égal à 1,1, par exemple inférieur ou égal à 1,0 et/ou supérieur à 0,5, de préférence supérieur à 0,8, de préférence supérieur ou égal à 0,9. En particulier, le coefficient stoechiométrique x peut être égal à 1,0.

De préférence, le coefficient stoechiométrique z de l'élément chalcogène est inférieur à 3,5 et/ou supérieur à 1, de préférence supérieur à 2,0. En particulier, le coefficient stoechiométrique x peut être égal à 3,0.

A l'étape a), on dispose d'au moins une poudre lithiée, une poudre MT et une poudre chalcogène.

La poudre lithiée peut comporter pour plus de 90,0 % de sa masse, de préférence plus de 95,0 % de sa masse, voire plus de 99,0 % de sa masse, voire plus de 99,9 % de sa masse, du lithium.

Selon une variante préférée, la poudre lithiée comporte du lithium et, pour moins de 90 % de sa masse, l'élément chalcogène. De préférence la poudre lithiée comporte, pour plus de 90,0 % de sa masse des particules formées de lithium et de l'élément chalcogène. De préférence, la poudre comporte des particules d'un sel de lithium comportant l'élément chalcogène.

De préférence, la poudre comporte, de préférence pour plus de 90,0 % de sa masse, de préférence pour plus de 95,0 % de sa masse, voire plus de 99,0 % de sa masse, voire plus de 99,9 % de sa masse, le sel de lithium.

En particulier, dans une variante où la synthèse d'un matériau de formule $Li_xM_yS_z$ est visée, le sel de lithium peut être le sulfure de lithium $Li_2S$.

De préférence, la poudre MT comporte pour plus de 99,0 % de sa masse, de préférence pour plus de 99,9 % de sa masse, le métal de transition. Elle peut consister en le métal de transition.

De préférence, la poudre MT est formée pour plus de 90,0 % de sa masse, de préférence pour plus de 95,0 % de sa masse, de préférence pour plus de 99,0% de sa masse, de préférence pour plus de 99,9% de sa masse, de particules faites du métal de transition.

Le métal de transition peut être le titane ou le manganèse ou le cobalt ou le nickel ou le niobium ou l'étain ou le fer.

De préférence, le métal de transition est le titane, et de préférence le matériau obtenu en fin d'étape c) présente alors la formule $Li_xTi_yA_z$.

Dans une variante, la pluralité de poudres comporte au moins deux poudres MT différentes l'une de l'autre, qui peuvent différer par leur granulométries et/ou de préférence par leurs compositions.

En particulier, la pluralité de poudres peut comporter des première et deuxième poudres MT différentes l'une de l'autre, notamment au moins par leurs compositions.

De préférence, le métal de transition de la première poudre MT est le titane et le métal de transition de la deuxième poudre MT est choisi parmi le cobalt, le manganèse, le nickel, le niobium, l'étain, le fer et leurs mélanges. De préférence, les quantités de première et de deuxième poudres MT sont choisies de sorte que le matériau obtenu en fin d'étape de broyage c) présente la formule $Li_x(Ti_bM'_{1-b})_yA_z$, M' étant choisi parmi le cobalt, le manganèse, le nickel, le niobium, l'étain, le fer et leurs mélanges, le coefficient b étant tel que $0 < b < 1$. Bien évidemment, les coefficients x, y et z sont tels que décrits précédemment.

Le coefficient b peut être supérieur à 0,1, supérieur à 0,2, supérieur à 0,3, supérieur à 0,4, supérieur à 0,5, supérieur à 0,6, supérieur à 0,7, supérieur à 0,8, supérieur à 0,9. Il peut être inférieur à 0,9, inférieur à 0,8, inférieur à 0,7, inférieur à 0,6, inférieur à 0,5, inférieur à 0,4, inférieur à 0,3, inférieur à 0,2, inférieur à 0,1.

De préférence, l'élément chalcogène de la deuxième poudre est le sélénium.

La taille médiane de la poudre MT est de préférence inférieure à 100 $\mu$m, voire inférieure à 50 $\mu$m. L'efficacité de la réaction de l'élément chalcogène avec le lithium et/ou l'élément chalcogène au cours de l'étape de broyage c) sont ainsi améliorée.

De préférence, la poudre chalcogène comporte pour plus de 99 % de sa masse, de préférence pour plus de 99,9 % de sa masse, l'élément chalcogène. Elle peut consister en l'élément chalcogène.

De préférence, la poudre chalcogène est formée pour plus de 90,0 % de sa masse, de préférence pour plus de 95,0 % de sa masse, de préférence pour plus de 99,0% de sa masse, de préférence pour plus de 99,9% de sa masse, de particules faites de l'élément chalcogène.

De préférence l'élément chalcogène est le soufre ou le sélénium ou le tellure.

De préférence, l'élément chalcogène est le soufre, et de préférence le matériau obtenu en fin d'étape c) présente alors la formule $Li_xM_yS_z$. Les coefficients stoechiométriques x, y et z, sont tels que décrits ci-dessus.

La taille médiane de la poudre MT est de préférence inférieure à 100 $\mu$m, voire inférieure à 50 $\mu$m. L'efficacité de la réaction de l'élément chalcogène avec le lithium et/ou le métal de transition au cours de l'étape de broyage c) sont ainsi améliorée.

Dans une variante, la pluralité de poudres comporte au moins deux poudres chalcogènes différentes l'une de l'autre, qui peuvent différer par leur granulométries et/ou de préférence par leurs compositions.

En particulier, la pluralité de poudres peut comporter des première et deuxième poudres chalcogènes différentes l'une de l'autre, notamment au moins par leurs compositions.

De préférence, l'élément chalcogène de la première poudre chalcogène est le soufre et l'élément chalcogène de la deuxième poudre chalcogène est choisi parmi le sélénium, le tellure et leurs mélanges. De préférence, les quantités de première et de deuxième poudres chalcogènes sont choisies de sorte que le matériau obtenu en fin d'étape de broyage c) présente la formule $Li_xM_y(A'_cS_{1-c})_z$, A' étant choisi parmi le tellure, le sélénium et leurs mélanges, le coefficient c étant tel que $0 < c < 1$. Les coefficients stoechiométriques x, y et z, sont tels que décrits ci-dessus.

Le coefficient c peut être supérieur à 0,1, supérieur à 0,2, supérieur à 0,3, supérieur à 0,4, supérieur à 0,5, supérieur à 0,6, supérieur à 0,7, supérieur à 0,8, supérieur à 0,9. Il peut être inférieur à 0,9, inférieur à 0,8, inférieur à 0,7, inférieur à 0,6, inférieur à 0,5, inférieur à 0,4, inférieur à 0,3, inférieur à 0,2, inférieur à 0,1.

Comme cela apparaît clairement à l'homme du métier, les modes de mise en oeuvre décrits ci-dessus de la ou des poudres MT et de la ou des poudres chalcogènes peuvent être combinés entre eux.

Par exemple, la pluralité de poudre comporte des première et deuxième poudres MT et des première et deuxième poudres chalcogènes en des quantités telles que le matériau obtenu en fin d'étape c) est de formule $Li_x(Ti_bM'_{1-b})_y(A'_cS_{1-c})_z$. Les coefficients x, y, z, b et c sont tels que décrits ci-dessus.

En variante, l'élément chalcogène de la poudre MT est le sélénium et le métal de transition est le titane et les quantités des poudres de la pluralité sont choisies de telle sorte que le matériau obtenu en fin d'étape c) est de formule $Li_xTi_yS_z$,

Dans un mode de mise en oeuvre particulier du procédé, la poudre MT peut comporter pour plus de 99,9% de sa masse des particules de sulfure de lithium, la poudre chalcogène peut comporter pour plus de 99,9% de sa masse des particules de soufre et la poudre MT peut comporter pour plus de 99,9% de sa masse des particules de titane, et les quantités desdites poudres sont déterminées de telle sorte que le matériau obtenu en fin d'étape c) est de formule

$Li_2TiS_3$ et de structure cristallographique NaCl. le matériau de formule $Li_2TiS_3$ est obtenu suivant le schéma réactionnel suivant :

$$Li_2S + Ti + 2S \rightarrow Li_2TiS_3$$

Les ions lithium $Li^+$ du sulfure de lithium titane obtenu par le mode de mise en oeuvre spécifique du procédé selon l'invention, proviennent du précurseur sulfure de lithium $Li_2S$ et les ions titane $Ti^{4+}$ proviennent du précurseur titane Ti et les ions soufre $S^{2-}$ proviennent des précurseurs sulfure de lithium $Li_2S$ et soufre S.

Dans un autre mode de mise en oeuvre particulier du procédé, la poudre MT peut comporter pour plus de 99,9% de sa masse des particules de sulfure de lithium, la poudre chalcogène peut comporter pour plus de 99,9% de sa masse des particules de soufre et la poudre MT peut comporter pour plus de 99,9% de sa masse des particules de titane, et les quantités desdites poudres sont déterminées de telle sorte que le matériau obtenu en fin d'étape c) est de formule $Li_3TiS_4$ et de structure cristallographique NaCl.

A l'étape b), toutes les poudres de la pluralité peuvent être mélangées pour former le mélange particulaire. Le mélange particulaire consiste de préférence en les poudres de la pluralité. Notamment, le mélange particulaire peut être préparé préalablement au broyage. Alternativement, toutes les poudres peuvent être versées consécutivement dans le bol du broyeur pendant le broyage.

En variante, le mélange particulaire peut être préparé en mélangeant une des poudres de la pluralité avec le broyat obtenu à partir d'au moins deux des autres poudres de la pluralité. Le procédé peut alors comporter une étape b') successive à l'étape a) et préalable à l'étape b), comportant le mélange desdites autres poudres pour former un ensemble particulaire, puis le broyage de l'ensemble particulaire pour former le broyât. Le broyat se présente sous forme particulaire. De préférence, le mélange particulaire consiste en l'une des poudres de la pluralité et le broyat obtenu à partir d'au moins deux des autres poudres de la pluralité.

Le broyage de l'ensemble particulaire peut être mis en oeuvre avec le broyeur mis en oeuvre à l'étape c), de préférence en milieu humide dans un solvant.

Le broyage de l'ensemble particulaire peut être mis en oeuvre dans un solvant.

Le solvant à l'étape b') peut être choisi parmi l'hexane, le cyclohexane, l'heptane et leurs mélanges. De préférence, le solvant à l'étape b') est l'hexane, de préférence de pureté supérieure à 99,5 %, de préférence supérieure à 99,9 %.

De préférence, à l'étape b'), l'ensemble particulaire est dispersé dans le solvant.

De préférence, le broyage à l'étape b') est conduit pour que les particules du broyat soient le produit de la réaction des constituants des poudres de l'ensemble particulaire.

L'ensemble particulaire peut être formé en mélangeant la poudre MT et la poudre chalcogène, ou en mélangeant la poudre MT et la poudre lithiée, ou en mélangeant la poudre chalcogène et la poudre lithiée.

A l'étape c), le broyage du mélange particulaire peut être mis en oeuvre en milieu humide dans un solvant.

Le solvant à l'étape c) peut être choisi parmi l'hexane, le cyclohexane, un mélange d'heptane, d'acétone et d'éthanol, et leurs mélanges. De préférence, le solvant à l'étape c) est l'hexane, de préférence de pureté supérieure à 99,5 %, de préférence supérieure à 99,9 %.

Les solvants aux étapes b') et c) peuvent être identiques.

De préférence, à l'étape c), le mélange particulaire est dispersé dans le solvant.

L'étape de broyage du mélange particulaire est mise en oeuvre au sein d'un broyeur, par exemple un broyeur planétaire à billes, dont la vitesse de rotation peut être supérieure à 500 tours par minutes. L'invention n'est toutefois pas limitée à un tel type de broyeur. Tout autre broyeur conventionnellement utilisé dans le domaine de l'invention peut être utilisé, pourvu que l'énergie de broyage qu'il est apte à apporter au mélange particulaire soit suffisante pour que les constituants du mélange particulaire réagissent ensemble.

De préférence, la durée de l'étape de broyage c) est comprise entre 10 h et 50 h, de préférence est comprise entre 15 h et 25 h. Par ailleurs, l'étape de broyage peut être conduite à une température comprise entre 10 °C et 40 °C, par exemple à température ambiante.

A l'étape c), le solvant peut être introduit avant, conjointement ou après l'introduction du mélange particulaire dans le broyeur.

Pour limiter la corrosion du mélange particulaire et du matériau en formation, et notamment du métal de transition, l'étape de broyage du mélange particulaire est de préférence mise en oeuvre sous une atmosphère réductrice ou de préférence neutre, par exemple sous argon.

De préférence, le matériau obtenu par réaction des constituants du mélange particulaire en fin d'étape c) se présente sous forme d'une poudre.

Le procédé peut par ailleurs comporter une étape de séchage successive à l'étape de broyage c), de manière à éliminer le solvant.

Le matériau obtenu en fin d'étape de broyage c) peut former au moins partiellement une cathode de batterie, notamment d'une batterie lithium-ion.

Il présente de préférence une structure cristallographique de type NaCl. Une structure cristallographique « de type NaCl » est une structure cubique à face centrée de groupe d'espace $Fm\overline{3}m$.

Par ailleurs, les particules du matériau obtenu par le procédé selon l'invention se présente de préférence sous la forme d'une poudre. Les particules de la poudre peuvent être de forme variée. Par exemple, les particules sont de forme sphérique ou plaquettaire. Les particules peuvent présenter une taille comprise entre 20 nm et 5 $\mu$m, notamment inférieure à 1 $\mu$m. La « taille » d'une particule est sa plus grande dimension, par exemple observable sur un cliché pris au moyen d'un microscope électronique à balayage, suivant une direction perpendiculaire au plan sur lequel repose ladite particule. Par ailleurs, les particules peuvent former des agglomérats, présentant par exemple une taille de l'ordre de 30 $\mu$m.

Le matériau obtenu en fin d'étape c) de broyage peut présenter de préférence une capacité réversible maximale supérieure à 200 mAh.g$^{-1}$, voire supérieure à 230 mAh.g$^{-1}$, exprimée par gramme de matériau selon l'invention, La capacité réversible est mesurée entre 1,5 V et 3,0 V $vs$ Li$^+$/Li selon un régime C/10. Un régime C/y correspond à une charge effectuée en y heures

Par ailleurs, l'invention concerne une cathode de batterie comportant, voire constituée par le matériau obtenu par le procédé selon l'invention.

D'autres avantages de l'invention apparaitront à la lecture des exemples qui vont suivre, et grâce au dessin annexé dans lequel :

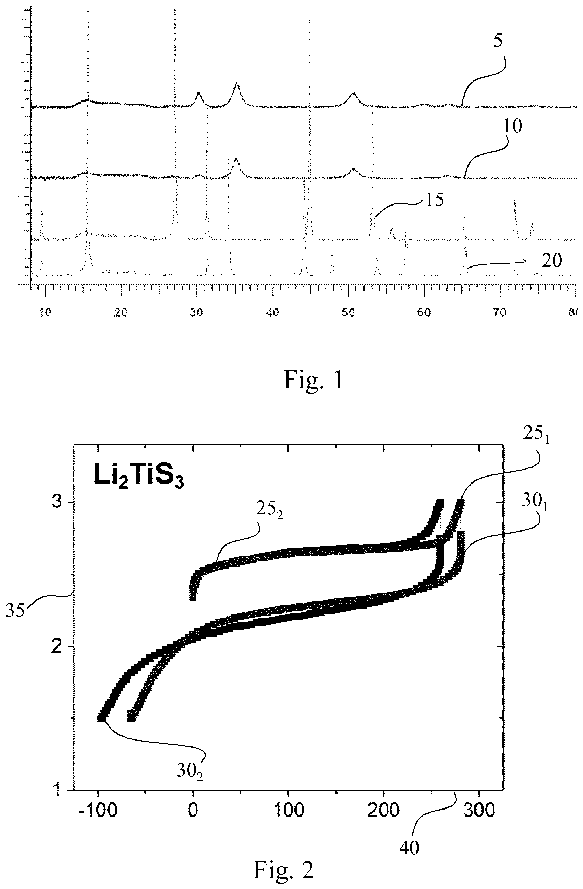

- la figure 1 contient des diffractogrammes obtenus par diffraction des rayons X de matériaux de formule Li$_2$TiS$_3$ obtenus le procédé selon l'invention et selon l'art antérieur, dans lesquels l'intensité de diffraction, en unité arbitraire, est exprimée en fonction de l'angle $2\theta$ de diffraction, et
- la figure 2 est un graphique représentant l'évolution du potentiel, en V $vs$ Li+/Li, en fonction de la capacité, en mAh/g, lors du premier cycle de charge/décharge, d'une batterie comportant le matériau de formule Li$_2$TiS$_3$ obtenu par le procédé de l'art antérieur et par le procédé de l'invention.

## EXEMPLES

Les exemples non limitatifs suivants sont donnés dans le but d'illustrer l'invention.

Les matières premières suivantes sont utilisées pour réaliser les exemples suivants :

- poudre de particules de sulfure de lithium Li$_2$S, commercialisée sous la référence 213241-10G par la société Sigma Aldrich,
- poudre de particules de sulfure de titane TiS$_2$, commercialisée sous la référence 333492-10G par la société Sigma Aldrich,
- poudre de particules de titane Ti, comportant en masse au moins 99,98 % de titane, les particules présentant une taille inférieure à 44 $\mu$m, commercialisée par la société Sigma Aldrich, et
- poudre de flocons de soufre S, comportant en masse au moins 99,99 % de soufre, commercialisée par la société Sigma Aldrich.

Par ailleurs, les analyses de diffraction par rayon X ont été réalisées au moyen d'un diffractomètre D8 Advance de marque Bruker®.

Exemple 1 comparatif

0,44 g de poudre de sulfure de lithium et 1,06 g de poudre de sulfure de titane sont placés dans un pot en zircone d'un volume de 50 ml et contenant 285 billes de zircone d'un diamètre égal à 5 mm. Aucun solvant n'est ajouté. Le pot est ensuite fermé au moyen d'un couvercle et monté sur un broyeur à billes planétaires de marque Retsch® et de référence PM 100. Le bol est chargé et déchargé dans une boite à gants emplie d'argon. Le broyage est alors réalisé pendant une durée de 20 heures, la vitesse de rotation du broyeur étant fixée à 510 tours par minutes.

Une poudre de particules de Li$_2$TiS$_3$ est ainsi obtenue.

Dans une boite à gants sous atmosphère d'argon, on prépare ensuite une composition comportant en pourcentages en masse, 10 % de carbone Super P C65 commercialisé par la société TIMCAL, 10 % de difluorure de polyvinylidène (PVDF) à titre de liant, et 80 % de la poudre de particules de Li$_2$TiS$_3$. 0,400 ml de N-méthyl-2-pyrrolidone (NMP) sont ajoutés à la composition. La composition est ensuite mélangée pendant 5 minutes à 25°C. On obtient ainsi une encre. On enduit une épaisseur de 100 $\mu$m de l'encre, au moyen d'une racle sur un feuillard d'aluminium. L'encre est séchée sous une atmosphère d'argon pendant 24 heures à 70 °C. Une électrode est ensuite découpée dans le feuillard d'aluminium recouvert de l'encre ayant séché. L'électrode a la forme d'une pastille d'un diamètre de 14 mm, elle est pressée sous une pression de 100 kN, et enfin séchée sous vide à 60°C pendant 48 heures.

Une batterie se présentant sous la forme d'une pile bouton au format CR2032 est fabriquée et comporte l'électrode formant cathode et une contre-électrode de lithium (Li) métallique formant anode, d'un diamètre de 16 mm. Un séparateur sous forme d'une pastille d'un diamètre de 16 mm, constitué d'une membrane de marque Viledon de référence FS 2207-2- DA WA et d'une membrane Celgard 2400, est disposé entre l'électrode et la contre-électrode. Les électrodes, contre-électrode et séparateur sont immergés dans un volume de 150 $\mu$l d'un électrolyte liquide LP100 constitué d'un solvant formé, en masse, d'une part d'éthyl- carbonate, d'une part de propylene- carbonate et de trois parts de diméthyl-carbonate, dans lequel est dissous un sel d'hexafluorophosphate de lithium (LiPF6) à une concentration de 1 mol/l.

La batterie est soumise à 1 cycles formé d'une charge galvanostatique suivie d'une décharge galvanostatique, imposés à 25°C entre un potentiel de 1,5 V et 3,0 V vs $Li^+/Li$ à un régime de C/10.

Le système de cyclage de batterie est de marque Arbin Instruments®.

Exemple 2

0,40 g de poudre de sulfure de lithium, 0,42 g de poudre de titane et 0,56 g de poudre de soufre sont placés dans un pot en zircone d'un volume de 50 ml et contenant 285 billes de zircone d'un diamètre égal à 5 mm. De l'hexane de haute pureté (supérieure à 99,9%) est versée dans le pot jusqu'à recouvrir les billes de zircone. Le pot est ensuite fermé au moyen d'un couvercle et monté sur un broyeur à billes planétaires de marque Retsch® et de référence PM 100. Le broyeur est disposé dans une boite à gants emplie d'argon. Le broyage est alors réalisé pendant une durée de 32 heures, la vitesse de rotation du broyeur étant fixée à 510 tours par minutes.

Une poudre de particules de $Li_2TiS_3$ est ainsi obtenue.

Une électrode et une batterie sont fabriquées selon le même mode opérationnel que celui décrit à l'exemple 1 en remplaçant la poudre de l'exemple 1 par la poudre de l'exemple 2.

Des analyses par diffraction de rayons X des poudres de $Li_2TiS_3$ des exemples 1 et 2 confirment que les matériaux constitutifs de ces poudres présentent une structure cristallographique de type NaCl, comme cela est confirmé par les diffractogrammes respectifs 5 et 10 représentés sur la figure 1.

Par ailleurs, les diffractogrammes 15, 20 des poudres de $Li_2S$ et de $TiS_2$ de départ sont présentés sur la figure 1. Après broyage, aucune trace de $Li_2S$ et de $TiS_2$ n'est détectée pour l'exemple comparatif 1 et aucune trace de $Li_2S$ n'est détectée pour l'exemple 2, ce qui signifie que tous les constituants des mélanges particulaires ont réagi au cours du broyage pour former du sulfure de lithium titane.

Par ailleurs, les poudres de l'exemple comparatif 1 et de l'exemple comparatif 2 présentent toutes deux une structure cristallographique de type NaCl, comme cela est illustré par leurs diffractogrammes respectifs 5, 10.

La figure 2 représente l'évolution au cours du premier cycle de charge $25_{1-2}$ décharge $30_{1-2}$ du potentiel 35 de l'électrode positive comportant les matériaux des exemples 1 et 2 respectivement, en fonction de la capacité spécifique 40 du matériau. Les courbes $25_1$, $30_1$ correspondent à l'exemple 1 comparatif et les courbes $25_2$, $30_2$ correspondent à l'exemple 2 selon l'invention.

Bien entendu, l'invention n'est pas limitée aux modes de réalisation du produit et aux modes de mise en oeuvre du procédé présentés dans la présente description.

Par ailleurs, sauf indication contraire, une inégalité du type « A inférieur à B », aussi formulée comme « A < B », est considérée strictement. Il en va de même pour une inégalité du type « A supérieur à B », aussi formulée comme « A > B ». Autrement dit, l'égalité entre A et B est exclue.

## Revendications

1. Procédé de synthèse d'un matériau, le procédé comportant les étapes consistant à :

   a) disposer d'une pluralité de poudres comportant :

   - au moins une poudre comportant du lithium, dite « poudre lithiée »,
   - au moins une poudre comportant, pour plus de 95,0 % de sa masse, un métal de transition choisi parmi le titane, le cobalt, le manganèse, le nickel, le niobium, l'étain, le fer et leurs mélanges, dite « poudre MT », et
   - au moins une poudre comportant pour plus de 95,0 % de sa masse, un élément chalcogène choisi parmi le soufre, le sélénium, le tellure et leurs mélanges, dite « poudre chalcogène »,

   b) préparer un mélange particulaire en mélangeant toutes les poudres de la pluralité ou en mélangeant une des poudres de la pluralité avec un broyat obtenu par broyage d'un ensemble particulaire formé par mélange d'au moins deux des autres poudres de la pluralité, et

c) broyer le mélange particulaire pour former le matériau,

le matériau obtenu en fin d'étape c) présentant une structure cristallographique de type NaCl.

2.  Procédé selon la revendication 1, dans lequel les quantités de poudre lithiée, de poudre MT et de poudre chalcogène sont déterminées de telle sorte qu'en fin d'étape de broyage c), le matériau présente la formule (I)

$$Li_xM_yA_z,$$

Avec M étant un métal de transition choisi parmi le titane, le manganèse, le cobalt, le nickel, le niobium, l'étain, le fer et leurs mélanges, A étant un élément chalcogène choisi parmi le soufre, le tellure, le sélénium et leurs mélanges, les coefficients stoechiométriques x, y et z étant tels que

$$1,0 < x < 4,0 ;$$

$$0 < y \leq 2,0 ;$$

et

$$1,0 \leq z \leq 4,0.$$

3.  Procédé selon l'une quelconque des revendications 1 et 2, dans lequel la poudre lithiée comporte du lithium et, pour moins de 90 % de sa masse, de l'élément chalcogène.

4.  Procédé selon l'une quelconque des revendications précédentes, dans lequel le métal de transition est le titane ou le manganèse ou le cobalt ou le nickel ou le niobium ou l'étain ou le fer, de préférence est le titane.

5.  Procédé selon l'une quelconque des revendications 1 à 3, dans lequel la pluralité de poudres comporte des première et deuxième poudres MT différentes l'une de l'autre.

6.  Procédé selon la revendication précédente, dans lequel préférence le métal de transition de la première poudre MT est le titane et le métal de transition de la deuxième poudre MT est choisi parmi le cobalt, le manganèse, le nickel, le niobium, l'étain, le fer et leurs mélanges.

7.  Procédé selon la revendication 6 dépendante au moins de la revendication 2, dans lequel, dans lequel les quantités de première et de deuxième poudres MT sont choisies de sorte que le matériau obtenu en fin d'étape de broyage c) présente la formule $Li_x(Ti_bM'_{1-b})_yA_z$, M' étant choisi parmi le cobalt, le manganèse, le nickel, le niobium, l'étain, le fer et leurs mélanges, le coefficient b étant tel que 0 < b < 1.

8.  Procédé selon l'une quelconque des revendications précédentes, dans lequel l'élément chalcogène est le soufre ou le sélénium ou le tellure, de préférence est le soufre.

9.  Procédé selon l'une quelconque des revendications précédentes, dans lequel la pluralité de poudres comporte des première et deuxième poudres chalcogènes différentes l'une de l'autre.

10. Procédé selon la revendication 9, dans lequel l'élément chalcogène de la première poudre chalcogène est le soufre et l'élément chalcogène de la deuxième poudre chalcogène est choisi parmi le sélénium, le tellure et leurs mélanges.

11. Procédé selon la revendication 10 dépendante au moins de la revendication 2, dans lequel les quantités de première et de deuxième poudres chalcogènes sont choisies de sorte que le matériau obtenu en fin d'étape de broyage c) présente la formule $Li_xM_y(A'_cS_{1-c})_z$, A' étant choisi parmi le tellure, le sélénium et leurs mélanges, le coefficient c étant tel que 0 < c < 1.

12. Procédé selon l'une quelconque des revendications 2 à 11, dans lequel

$$1,9 < x < 3,1$$

et/ou

$$0,9 < y < 1,1$$

et/ou

$$2,0 < z < 3,5.$$

13. Procédé selon l'une quelconque des revendications précédentes, dans lequel la poudre MT comporte pour plus de 99,9% de sa masse des particules de sulfure de lithium, la poudre chalcogène comporte pour plus de 99,9% de sa masse des particules de soufre et la poudre MT comporte pour plus de 99,9% de sa masse des particules de titane, et les quantités desdites poudres sont déterminées de telle sorte que le matériau obtenu en fin d'étape c) est de formule $Li_2TiS_3$.

14. Procédé selon l'une quelconque des revendications précédentes, dans lequel à l'étape c), le broyage du mélange particulaire est mis en oeuvre en milieu humide dans un solvant, notamment choisi parmi l'hexane, le cyclohexane, un mélange d'heptane, d'acétone et d'éthanol, et leurs mélanges, de préférence étant l'hexane.

Fig. 1

Fig. 2

Europäisches
Patentamt

European
Patent Office

Office européen
des brevets

**RAPPORT DE RECHERCHE EUROPEENNE**

Numéro de la demande

EP 19 19 8440

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ZHANG ZIPING ET AL: "Sealed-tube synthesis and phase diagram of LixTiS2(0<=x", MATERIALS RESEARCH BULLETIN, ELSEVIER, KIDLINGTON, GB, vol. 61, 19 octobre 2014 (2014-10-19), pages 499-503, XP029112213, ISSN: 0025-5408, DOI: 10.1016/J.MATERRESBULL.2014.10.045 * Abstract, Experimental * | 1-14 | INV. C01G19/00 C01G23/00 C01G33/00 C01G45/00 C01G49/00 C01G51/00 C01G53/00 C01B19/00 |
| A,D | EP 2 977 354 A1 (NAT INST OF ADVANCED IND SCIEN [JP]) 27 janvier 2016 (2016-01-27) * revendications * | 1-14 | |
| A | US 2016/308210 A1 (SAKUDA ATSUSHI [JP] ET AL) 20 octobre 2016 (2016-10-20) * alinéas [0138], [0143] - [0145]; revendications; tableau 1 * | 1-14 | |
| A | YAMAMOTO T ET AL: "LITHIUM SECONDARY BATTERY USING MONOCLINIC NBS3 PREPARED UNDER HIGH PRESSURE", JOURNAL OF THE ELECTROCHEMICAL SOCIETY, ELECTROCHEMICAL SOCIETY, vol. 133, no. 8, 1 août 1986 (1986-08-01), pages 1558-1561, XP000034324, ISSN: 0013-4651 * Experimental * | 1-14 | **DOMAINES TECHNIQUES RECHERCHES (IPC)** C01G C01B |

Le présent rapport a été établi pour toutes les revendications

| Lieu de la recherche | Date d'achèvement de la recherche | Examinateur |
|---|---|---|
| Munich | 6 novembre 2019 | Marucci, Alessandra |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

....................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 19 19 8440

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-11-2019

| Document brevet cité au rapport de recherche | | | Date de publication | Membre(s) de la famille de brevet(s) | | | Date de publication |
|---|---|---|---|---|---|---|---|
| EP 2977354 | A1 | | 27-01-2016 | CN | 105189358 | A | 23-12-2015 |
| | | | | EP | 2977354 | A1 | 27-01-2016 |
| | | | | JP | 6011989 | B2 | 25-10-2016 |
| | | | | JP | WO2014148432 | A1 | 16-02-2017 |
| | | | | KR | 20150127281 | A | 16-11-2015 |
| | | | | US | 2016285097 | A1 | 29-09-2016 |
| | | | | WO | 2014148432 | A1 | 25-09-2014 |
| US 2016308210 | A1 | | 20-10-2016 | CN | 105531232 | A | 27-04-2016 |
| | | | | EP | 3053883 | A1 | 10-08-2016 |
| | | | | JP | 6370796 | B2 | 08-08-2018 |
| | | | | JP | WO2015049986 | A1 | 09-03-2017 |
| | | | | KR | 20160065931 | A | 09-06-2016 |
| | | | | US | 2016308210 | A1 | 20-10-2016 |
| | | | | WO | 2015049986 | A1 | 09-04-2015 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2977354 A1

**Littérature non-brevet citée dans la description**

- **A. SAKUDA et al.** Rock-salt-type lithium metal sulphide as novel positive-electrode materials. *Sci. Rep.,* 2014, vol. 4, 4883